# EUROPÄISCHE PATENTSCHRIFT

(11) **EP 1 840 085 B1**
(45) Veröffentlichungstag und Bekanntmachung des Hinweises auf die Patenterteilung: **26.10.2016**
(21) Anmeldenummer: 07004497.9
(22) Anmeldetag: 06.03.2007
(51) Int. Cl.: C01F 7/02, C01F 7/44, C08K 3/22, C09K 21/02

(54) **VERFAHREN ZUR HERSTELLUNG EINES FEINKRISTALLINEN BÖHMITS**
PROCESS FOR THE PREPARATION OF FINE CRYSTALLINE BOEHMITE
PROCÉDÉ DE PRÉPARATION D'UN BOEHMITE À CRISTAUX FINS

(30) Priorität: 15.03.2006 DE 102006012268
(43) Veröffentlichungstag der Anmeldung: 03.10.2007
(73) Patentinhaber: Nabaltec AG, 92421 Schwandorf (DE)
(72) Erfinder: Reimer, Alfred, Dr., 93437 Furth i. Wald (DE); Sauerwein, Reiner, Dr., 92449 Steinberg am See (DE); Sorgalla, Manfred, 92421 Schwandorf (DE); Edenharter, Ludwig, 93133 Burglengenfeld (DE)
(74) Vertreter: Büchel, Edwin

(56) Entgegenhaltungen:
- EP-A- 0 263 810
- EP-A- 1 200 350
- EP-B- 0 304 721
- WO-A-2005/100244
- DE-A1- 3 617 115
- DE-C1- 19 812 279
- US-A- 4 117 105
- US-A- 5 194 243
- US-B1- 6 413 308
- US-B1- 6 461 584
- DATABASE WPI Week 198850 Thomson Scientific, London, GB; AN 1988-356288 XP002490017 & JP 63 265810 A (SUMITOMO METAL MINING CO) 2. November 1988 (1988-11-02)

## Beschreibung

Die Erfindung betrifft ein Verfahren zur Herstellung eines feinteiligen Böhmits mit einem mittleren Korndurchmesser D50 im Bereich von 50 bis 400 nm und einer BET-Oberfläche im Bereich von 10 bis 40 m²/g mittels autokatalytischer, hydrothermaler Kristallisation.

Aus der US 4,117,105 ist die Überführung von Aluminiumtrihydrat zu gut dispergierbarem Böhmit bekannt. Nach dem bekannten Verfahren wird Aluminiumtrihydrat mit einer BET-Oberfläche von 0,2 bis 15 m²/g bei Temperaturen von 200 bis 800°C für 2 bis 17 Stunden kalziniert, bis die BET-Oberfäche auf 250 bis 800 m²/g angestiegen ist. Dann wird eine Aufschlemmung des kalzinierten Aluminiumoxids bei einer Temperatur von 140 und 200°C für 0,5 bis 6 Stunden im Autoklaven rehydriert.

Eine flammwidrige Kunststoffmischung und ein Verfahren zur Herstellung eines Füllstoffes ist aus der DE 19812279 C1 bekannt. Die Kunststoffmischung besteht aus 55 bis 75 % Böhmit in einer orthorombischen Kristallstruktur, wobei je nach Temperaturführung die BET-Oberflächen zwischen 14,75 und 17,25 schwanken. Als Füllstoff wird Böhmit mit einem Korndurchmesser von 0,5 bis 3 µm eingesetzt.

Aus der DE 69231902 T2 ist ein Verfahren zum Züchten von Kristallen, insbesondere solchen aus Metalloxiden mit erhöhter Geschwindigkeit bekannt. Dabei werden BET-Oberflächen im Bereich von 40 m²/g bei einer Kristallgröße von ca. 50 nm erreicht. Bei dem Verfahren wird eine Nährstofflösung mit einem pH-Wert von 3 bis 11 bereitgestellt für die Ablagerung auf einem Impfkristall, der eine Metalloxidspezies umfasst, die in dem wässrigen Medium ausreichend unlöslich ist, um ein festes Wachstumszentrum zu bilden. Die Behandlung erfolgt dann unter hydrothermalen Bedingungen, wobei Beschickungsmaterial bis zum Ende des Kristallwachstums zugegeben wird.

In JP 63265810 A ist ein Verfahren beschrieben, bei dem glatte α-Al₂O₃-Kugeln aus Aluminiumhydrat gewonnen werden, indem Aluminiumhydrat bei einem pH-Wert zwischen 1 und 4 einer Nassmahlung unterzogen wird. Das α-Al₂O₃ wird anschließend bei 1350 bis 1500°C durch Kalzination erhalten.

Bei der Herstellung des Ionenleiters Beta-Aluminiumoxid ist es gemäß DE 3617115 A1 bekannt, Böhmit mit Wasser zu mischen und die Mischung mittels Essigsäure auf einen pH-Wert von 4 einzustellen. Die Mischung wird dann gemahlen und Natriumoxid und Spinellstabilisator werden in die gemahlene Mischung in wässriger Lösung eingemischt, woraufhin eine Peptisierung folgt, z.B. durch erneuertes Ansäuern auf einen pH von etwa 4 unter Verwendung von Essigsäure und dann bei erhöhter Temperatur (80°C für 20 Minuten) ein Gel gebildet wird. Das Produkt kann vorzugsweise zu einem selbsttragenden Erzeugnis, bestehend aus Beta-Aluminiumoxid, durch isostatisches Verpressen geformt werden.

Ein Verfahren zur Herstellung von quasi-kristallinen Böhmiten aus einer Böhmitvorstufe unter Verwendung von Impfkristallen durch hydrothermale Behandlung ist aus DE 60015345 T2 bekannt. Als Kristalle können auch gemahlene Böhmite verwendet werden, wobei die hydrothermale Reaktion bei pH-Werten kleiner gleich 7 stattfinden. Ferner ist die Herstellung von mikrokristallinem Böhmit und keramischen Körpern in DE 3879584 T2 beschrieben, bei dem eine Vorstufe des Böhmit und Böhmitimpfkristallen unter hydrothermalen Bedingungen bei pH-Werten von 8 oder höher und Temperaturen von oberhalb 130°C eingesetzt werden. Ein Verfahren zur Herstellung feinstteiliger Impfer ist aus US 189 H1 bekannt. Mit Hilfe dieses Impfers wird in einem Gelprozess Alpha-Aluminiumoxid als Impfer in einem Böhmit-Gel hergestellt und bei relativ niedrigen Temperaturen in feinkristallines Alpha-Aluminiumoxid umgewandelt. Dieses Material wird für die Herstellung in der Elektroindustrie oder als Schleifmittel verwendet.

WO 2005/100244 beschreibt ein Hydrothermalverfahren zur Herstellung von Böhmit, bei dem Aluminiumtrihydroxid als Böhmit-Vorläufermaterial und Böhmit-Impfer in einem Autoklaven bei 180°C behandelt werden. Zur Einstellung des pH-Werts werden Kaliumhydroxid und Salpetersäure verwendet. Das erhaltene Böhmit-Produkt wird getrocknet und zerkleinert. Als Alternativen für die Einstellung des pH-Werts können auch organische Säuren wie Ameisensäure eingesetzt werden. Als Böhmit-Impfer wird ein kommerziell erhältliches Produkt eingesetzt.

Für die Verwendung in Flammschutzmitteln bei Kunststoffen wird ein möglichst feinkristalliner Böhmit benötigt, der eine geringe Oberfläche und ein geringes Porenvolumen aufweist. Das Flammschutzmittel soll sich leicht bei hohem Füllgrad in die Kunststoffe einmischen lassen und dabei eine hohe Entflammbarkeitsklasse erreichen. Ferner sollen die mechanischen Festigkeitswerte wie Zugfestigkeit und Bruchdehnung auf einem hohen Niveau liegen.

Aufgabe der vorliegenden Erfindung ist es daher, ein Verfahren zur Herstellung von feinkristallinem Böhmit mit einer geringen Oberfläche und einem geringen Porenvolumen bereitzustellen, das sich bei hohem Füllgrad leicht in Kunststoffe einmischen lässt und eine hohe Flammschutzklasse bei gleichzeitig guten mechanischen Festigkeitswerten ermöglicht.

Gelöst werden die Aufgaben nach den technischen Merkmalen des unabhängigen Anspruchs.

Bevorzugte Ausführungsformen sind in den abhängigen Ansprüchen dargestellt.

Erfindungsgemäß wird ein feinkristalliner Böhmit bereitgestellt, der einen mittleren Korndurchmesser von D50 im Bereich von 50 - 400 nm, bevorzugt 100 - 300 nm, besonders bevorzugt 150 - 250 nm aufweist. Weiterhin weist der feinkristalline Böhmit jeweils eine BET-Oberfläche im Bereich von 10 - 40 m²/g, bevorzugt 15 - 35 m²/g, besonders bevorzugt 15 - 30 m²/g auf. Weiterhin weist der erfindungsgemäß hergestellte Böhmit ein Porenvolumen im Bereich von 0,05 bis 0,5 cm³ /g, besonders bevorzugt 0,1 - 0,4 cm³/g auf.

Erfindungsgemäß wird der zuvor genannte, feinkristalline Böhmit mit geringer Oberfläche aus einer Hydratquelle mittels des im Grundsatz bekannten Verfahrens der autokatalytischen, hydrothermalen Kristallisation hergestellt. Das Verfahren wird nachfolgend noch beschrieben. Erfindungswesentlich ist bei der Durchführung des Verfahrens der Einsatz eines besonderen Impfers. Die Eigenschaften des Impfers sowie Verfahren zu dessen Herstellung werden im Folgenden beschrieben.

Zur Herstellung des Impfers wird von einer Aluminiummonohydrat-Quelle ausgegangen. Die Aluminiummonohydrat-Quelle (AlO(OH)) weist dabei eine böhmitische Kristallstruktur auf und hat geeigneterweise Partikelgrößen mit einem D 50 von ca. 500 Nanometer und größer sowie eine BET-Oberfläche von 20 m²/g oder größer. Derartige Aluminiummonohydrat-Quellen sind im Handel erhältlich, beispielsweise unter dem Handelsnamen APYRAL der Nabaltec GmbH, Deutschland. Im Folgenden wird aus der Aluminiummonohydrat-Quelle eine wässrige Dispersion erstellt und diese vermahlen, vorzugsweise in einer Kugelmühle.

Überraschenderweise zeigte sich, dass bei einem Vermahlen der Aluminiummonohydratquelle in einer wässrigen Dispersion mit einem pH-Wert im Bereich von 2 bis 4, bevorzugt 2,5 bis 4,5 besonders bevorzugt ca. 3 die BET-Oberfläche und das Porenvolumen geringfügiger ansteigen als bei Vermahlen in neutraler oder leicht basischer Dispersion. Als besonders geeignet zeigten sich organische Säuren, insbesondere Essigsäure. Die Erfinder gehen davon aus, dass organische Säuren bei der tribochemischen Reaktion, welche während des Vermahlens zwischen Mahlwerk, Dispersionsflüssigkeit und frisch entstehender Bruchfläche des Böhmits stattfindet, als reduzierendes Medium das Entstehen von glatten Bruchflächen zusätzlich begünstigen.

Essigsäure zeigte in Vergleichsversuchen eine optimale Kombination von Säurestärke, Stabilität, Löslichkeit ihrer Salze und Mischbarkeit mit Wasser. Die stärkeren Säuren wie Ameisen- oder Oxalsäure neigten bei erhöhter Reaktionstemperatur zur Zersetzung, während längerkettige, schlechter mit Wasser mischbare, organische Säuren wie Pentan- und Hexansäure deutlich langsamer unter Ausbildung schwer löslicher Salze reagierten. Bei der Verwendung von Essigsäure konnte mit einer zwischen 50°C und 70°C gehaltenen Reaktionstemperatur stets eine schnelle Umsetzung und Vermahlung durchgeführt werden, ohne dass die Essigsäure zerfiel oder schwer lösliche Salze ausfielen.

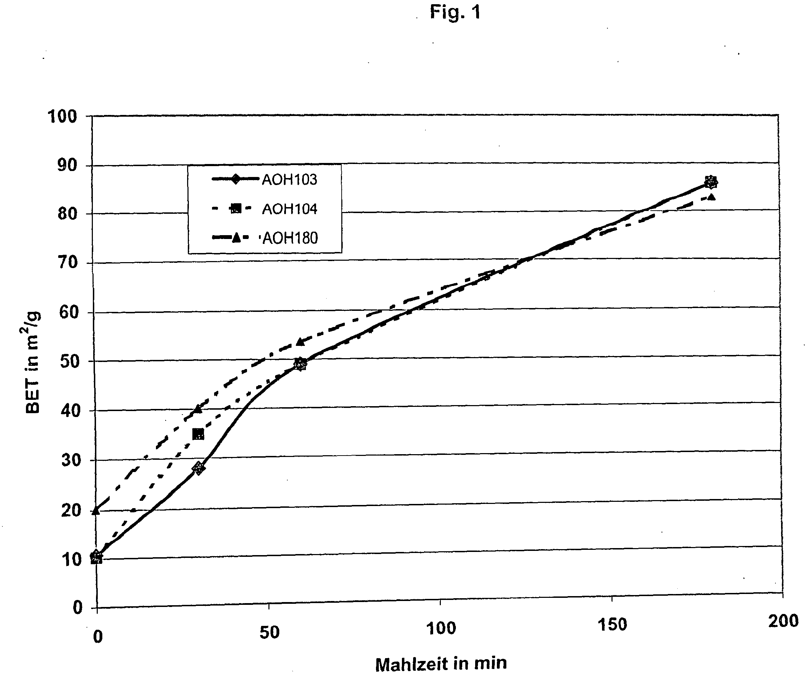

Figur 1 zeigt die Entwicklung der BET-Oberfläche in Abhängigkeit der Mahldauer für 3 kristalline Ausgangsböhmite gemäß der Tabelle 1.

Gezeigt sind die Ergebnisse einer Vermahlung nach dem Stande der Technik in neutraler, wässriger Dispersion. Die Feststoffkonzentration betrug 10 %, bezogen auf die böhmitische Aluminiummonohydrat-Quelle. Tabelle 1 zeigt die durchschnittliche Korngröße sowie die BET-Oberfläche der eingesetzten Ausgangssubstanzen vor dem Vermahlen. Die Bestimmung der BET-Oberfläche erfolgte nach DIN 66131 (nachfolgend ebenso).

**Tabelle 1:**

| D50 (nm) | BET (m²/g) | Bezeichnung |
|---|---|---|
| 3000 | 10 | AOH 103 |
| 1300 | 10 | AOH 104 |
| 600 | 20 | AOH 180 |

Wie aus Figur 1 ersichtlich steigt die BET-Oberfläche bei allen drei Ausgangsböhmiten erwartungsgemäß mit zunehmender Mahldauer und damit verbundener Verkleinerung der Kristalle an. Dargestellt ist der Verlauf der Entwicklung der BET-Oberfläche über die Mahldauer bei einer maximalen Mahldauer von ca. 3 Stunden (180 Minuten). Die Dispersion der Ausgangsböhmite hat einen pH-Wert von 9.

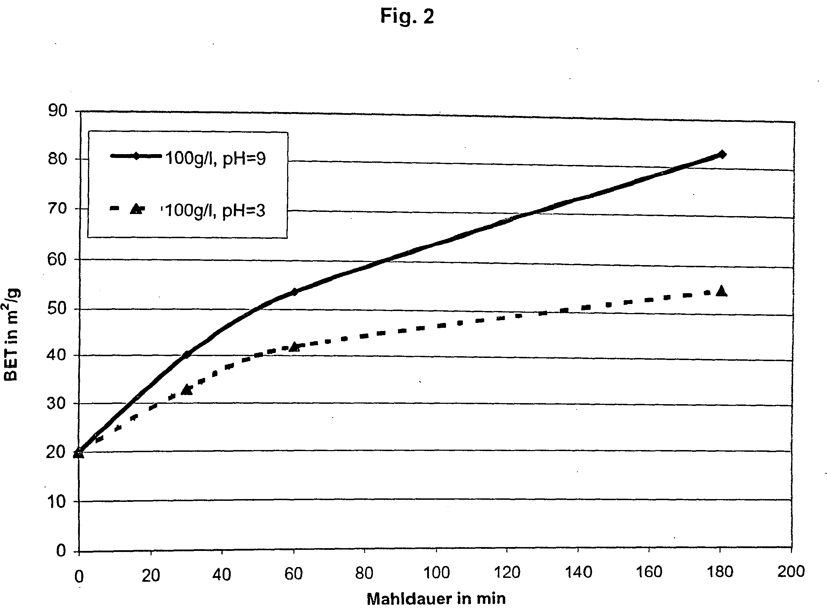

Figur 2 zeigt eine Gegenüberstellung der Entwicklung der BET-Oberfläche in Abhängigkeit der Mahlzeit über einen Zeitraum von 180 Minuten, wobei eine Dispersion einen pH-Wert von 9 aufweist und die zweite Dispersion einen pH-Wert von 3. Aus der Figur ist ersichtlich, dass der Anstieg der BET-Oberfläche bei der angesäuerten Dispersion deutlich geringer ist. In beiden Vergleichsversuchen wurde der Böhmit vom Typ AOH 180 gemäß Tabelle 1 verwendet.

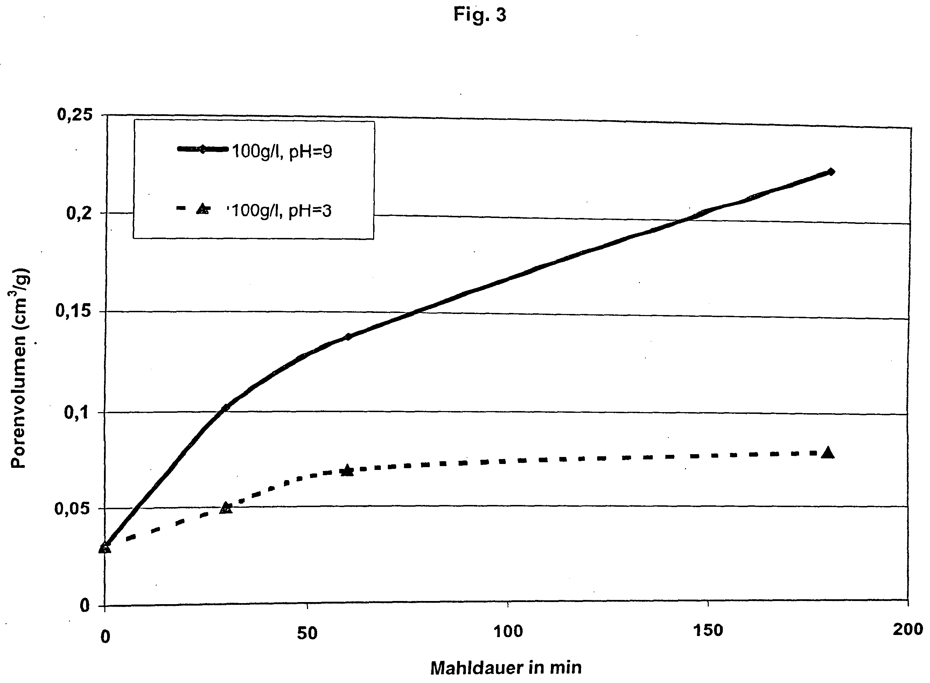

Figur 3 zeigt die Ergebnisse der Messung der Entwicklung der Porenvolumina bei dem Versuch gemäß Figur 2. Es ist ersichtlich, dass das Porenvolumen in der angesäuerten Dispersion überraschenderweise über die Mahlzeit nur geringfügig ansteigt, während das Porenvolumen bei einer herkömmlich vorbereiteten Dispersion stark ansteigt. Die Bestimmung des Porenvolumens erfolgte gemäß DIN 66134 durch Stickstoffsorption bei 77 K mit 99,99% reinem, trockenem Stickstoff; nachfolgend ebenso. Dabei wurde das Porenvolumen aus dem Stickstoff-Adsorptions- bzw. Stickstoff-Desorptions-Zweig der Isothermen gemäß dem Verfahren nach Gurwitsch bestimmt.

Weitere Versuche mit variierter Feststoffkonzentration an böhmitischer Aluminiummonohydrat-Quelle bestätigen den in Figur 3 veranschaulichten Sachverhalt. Mit einer Feststoffkonzentration bezogen auf die böhmitische Aluminiummonohydrat-Quelle im Bereich 5 bis 50 %, bevorzugt 10 bis 25 %, konnte die erläuterte Änderung des Porenvolumens bei angesäuerter Dispersion gefunden werden.

Beim Vermahlen wurde weiterhin die Temperatur der Dispersion im Bereich von vorzugsweise 50° bis 70° Celsius, besonders bevorzugt 60° Celsius gehalten. Die Kühlung der Dispersion kann mit bekannten Kühleinrichtungen erfolgen. Wird die während der Mahlreaktion freigesetzte Wärme über die Kühlung abgeführt und die Temperatur zwischen 50°C und 70°C gehalten, so bleibt die Menge an während der Vermahlung verdampfenden Wassers vernachlässigbar klein. Kommt es während der Vermahlung zu Temperaturspitzen von 80°C und mehr, so muss der Wassergehalt im 10-Minuten-Abstand überprüft und gegebenenfalls Wasser nachgefüllt werden. Bei einer Mahlreaktion bei 60°C kann eine Dispersion über mehrere Stunden vermahlen werden, ohne dass Wasser nachgefüllt werden müsste. Des Weiteren ist besonders bei der Verwendung von organischen Säuren bei 60°C die Menge an freigesetzter Säure so gering, dass zündfähige Säure/Luft-Gemische sicher vermieden werden.

Das gewonnene Produkt wird im Folgenden als Impfer für die hydrothermale Synthese von Böhmit verwendet. Nach Abschluss der Vermahlung kann die Dispersion direkt als Impferdispersion verwendet werden.

Nachfolgend wird das Verfahren zur Herstellung des feinkristallinen Böhmits mit geringer Oberfläche mittels autokatalytischer hydrothermaler Kristallisation unter Verwendung des zuvor beschriebenen Böhmit-Impfers erläutert.

Zur Durchführung der autokatalytischen, hydrothermalen Kristallisation wird eine alkalische wässrige Dispersion vorgelegt, umfassend eine geeignete Hydratquelle (Al(OH)₃) sowie den zuvor erläuterten Impfer. Die Hydratquelle, aus der die Dispersion erstellt wird, hat vorzugsweise eine Kornverteilung D50 von 0,5 bis 100 µm, besonders bevorzugt 0,5 bis 10 µm, insbesondere 0,5 bis 2 µm. Die Konzentration der Hydratquelle in der Dispersion beträgt geeigneterweise 10 bis 500 g/l, bevorzugt 50 bis 150 g/l, insbesondere 90 bis 110 g/l. Die Konzentration der Natronlauge in der Dispersion kann 4 bis 50, insbesondere 30 bis 40 g/l, bezogen auf freies Na₂O betragen. Die Feststoffkonzentration des Impfers beträgt geeigneterweise 0,5 bis 50 %, bevorzugt 1 bis 20 %, insbesondere 5 bis 15 %, jeweils bezogen auf die Hydratquelle.

Die autokatalytische hydrothermale Kristallisation der zuvor genannten Dispersion erfolgt in einem geeigneten Autoklaven. Die Reaktionstemperatur liegt dabei im Bereich von 110 bis 180° Celsius, bevorzugt 120° bis 150° Celsius, insbesondere 125 bis 135° Celsius. Die Reaktionszeit beträgt in Abhängigkeit der Aufbrauchrate der Hydratquelle 4 bis 24 Stunden.

Die Herstellung des Impfers sowie seine Vorteile gegenüber dem Stande der Technik sowie die Herstellung des Böhmits mittels autokatalytischer, hydrothermaler Kristallisation unter Verwendung des zuvor genannten Impfers wird nachfolgend anhand der Beispiele weiter erläutert.

### Beispiel 1

### Herstellung eines Imfpers

300g eines feinkristallisierten Aluminiummonohydrats mit einer spezifischen Oberfläche von 20 m²/g und einem mittleren Korndurchmesser D50 von 500 bis 600 nm (erhältlich unter dem Handelsnamen APYRAL AOH 180, der Nabaltec AG) wurden unter Verwendung eines Laborrührwerks in 3I Wasser dispergiert. Diese Dispersion wurde durch Zugabe von Essigsäure auf einen pH-Wert von etwa 3 eingestellt und in einer Laborrührwerkskugelmühle vermahlen. Verwendung fand eine Kugelmühle vom Typ (PML H/V) der Fa. Drais. Als Mahlkörper wurden Mahlkugeln der Gattierung 300-400 Mikrometer (Yttrium stabilisiertes Zirkonoxid) verwendet. Die Dispersion wurde bis zu 3h vermahlen. Die Temperatur wurde auf 60°C gehalten.

Es wurden Proben des Ausgangsstoffes sowie nach 30 min, 60 min sowie nach 180 min Mahlvorgang vermessen. Die Tabelle 2 fasst die wichtigsten Parameter der resultierenden Produkte zusammen.

**Tabelle 2**

| **Mahldauer** | **Bezeichnung** | **BET-Oberfläche** | **Porenvolumen** | **Partikelgröße in nm* (D50)** |
|---|---|---|---|---|
| | | **in m²/g** | **in cm³/g** | |
| Ausgang | ApAOH180 | 20 | 0,03 | 500-600 |
| 30 min | ApAOH180_0,5h_pH3 | 33 | 0,05 | 400-500 |
| 60 min | ApAOH180_1h_pH3 | 42 | 0,07 | 300-400 |
| 180 min | ApAOH180_3h_pH3 | 50 | 0,08 | 200-300 |

| | | | | |
|---|---|---|---|---|
| * optisch über REM-Aufnahme | | | | |

### Beispiel 2

### Vergleichsbeispiel

300g eines fein kristallisierten Aluminiummonohydrats mit einer spezifischen Oberfläche von 20 m²/g wie aus Beispiel 1 wurden unter Verwendung eines Laborrührwerks in 3I Wasser dispergiert. Diese Dispersion wurde in einer Laborrührwerkskugelmühle bei einem pH-Wert von etwa 9 vermahlen. Als Mahlkörper wurden Mahlkugeln der Gattierung 300-400 Mikrometer (Yttrium stabilisiertes Zirkonoxid) verwendet. Die Dispersion wurde bis zu 3h vermahlen.

Es wurden Proben des Ausgangstoffes sowie nach 30 min, 60 min sowie nach 180 min Mahlvorgang vermessen. Die Tabelle 3 fasst die wichtigsten Parameter der resultierenden Produkte zusammen.

**Tabelle 3**

| **Mahldauer** | **Bezeichnung** | **BET-Oberfläche in m²/g** | **Porenvolumen in cm³/g** | **Partikelgröße in nm* (D50)** |
|---|---|---|---|---|
| Ausgang | ApAOH180 | 20 | 0,03 | 500-600 |
| 30 min | ApAOH180_0,5h | 40 | 0,10 | 400-500 |
| 60 min | ApAOH180_1h | 54 | 0,14 | 300-400 |
| 180 min | ApAOH180_3h | 83 | 0,23 | 200-300 |

| | | | | |
|---|---|---|---|---|
| * optisch über REM-Aufnahme | | | | |

### Beispiel 3

### Vergleichsbeispiel

300g eines fein kristallisierten Aluminiummonohydrats mit einer spezifischen Oberfläche von 6 m²/g (erhältlich unter dem Handelsnamen APYRAL AOH 60 der Nabaltec AG) wurden unter Verwendung einer Laborrührwerkskugelmühle wie in Beispiel 1 jedoch mit einem pH-Wert von etwa 9 vermahlen. Als Mahlkörper wurden Mahlkugeln der Gattierung 300-400 Mikrometer (Yttrium stabilisierte Zirkonoxid) verwendet. Die Dispersion wurde bis zu 3h vermahlen.

Es wurden Proben des Ausgangstoffes sowie nach 30 min, 60 min sowie nach 180 min Mahlvorgang vermessen. Die Tabelle 4 fasst die wichtigsten Parameter der resultierenden Produkte zusammen.

**Tabelle 4**

| **Mahldauer** | **Bezeichnung** | **BET-Oberfläche in m²/g** | **Porenvolume n in cm³/g** | **Partikelgröße in nm* (D50)** |
|---|---|---|---|---|
| Ausgang | ApAOH60 | 6 | 0,01 | 1000 |
| 60 min | ApAOH60_1h | 44 | 0,09 | 600-700 |
| 120 min | ApAOH60_2h | 65 | 0,14 | 400-500 |
| 180 min | ApAOH60_3h | 78 | 0,17 | 200-300 |

| | | | | |
|---|---|---|---|---|
| * optisch über REM-Aufnahme | | | | |

Die Gegenüberstellung der Beispiele 1 bis 3 zeigt unmittelbar die Vorteile des nach dem erfindungsgemäß vermahlenen Impfers sowie dessen Herstellungsverfahrens. Bei dem erfindungsgemäßen Beispiel 1 wird ausgehend von einem kommerziellen Böhmit mit einer Korngröße D50 von 500 bis 600 nm und einer BET-Oberfläche von 20 m²/g ein Zielimpfer erreicht mit der Zielkorngröße von 200 bis 300 nm, während gleichzeitig die BET-Oberfläche sowie das Porenvolumen nur moderat ansteigen. Im direkten Vergleich mit dem Vergleichsbeispiel 2, ausgehend von dem identischen Ausgangsböhmit, wird nach dem Stande der Technik bei der gewünschten Zielkorngröße eine deutlich höhere BET-Oberfläche sowie ein wesentlich größeres Porenvolumen erhalten.

Auch soweit von einem Böhmit mit geringerer BET-Oberfläche ausgegangen wird, so wird bei Impferherstellung nach dem Stande der Technik bei der gewünschten Zielkorngröße von 200 bis 300 nm eine wesentlich größere BET-Oberfläche erreicht.

### Beispiel 4

### Vergleichsbeispiel

Zubereitung einer Impferdispersion auf Basis eines kommerziellen Pseudo-Böhmits In 1l Wasser wurden 100g amorphes Aluminiummonohydrat mit einer spezifischen Oberfläche von 261 m²/g und einer Partikelgröße D50 von 37 µm sowie einem Porenvolumen von 0,37 cm³/g (erhältlich unter dem Handelsnahmen Plural SB, der Condea Chemie GmbH) unter Verwendung eines Laborrührwerks in 3l Wasser dispergiert. Anschließend wurde die Dispersion durch langsame Zugabe von Salpetersäure auf einen pH-Wert von 2 eingestellt. Eine Vermahlung fand nicht statt. Die Beispiele 5 bis 10 beschreiben die Herstellung der Böhmite durch autokatalytische, hydrothermale Kristallisation mit dem erfindungsgemäßen Impfer nach Beispiel 1 sowie den Vergleichsimpfern nach Beispielen 2 bis 4.

Nachfolgende Beispiele 5 bis 9 betreffen die Herstellung im Labormaßstab.

100 g feinstgefälltes Aluminiumhydroxid (APYRAL 40CD, der Nabaltec AG) und 10 g Impfer (bezogen auf das Trockengewicht) in Dispersion, hergestellt nach den Beispielen 1 bis 4, wurden unter Verwendung eines Laborrührwerks in Dünnlauge mit ca. 40 g/l freiem Na₂O zu einem Gesamtvolumen von 1l zusammengeführt. Das Beispiel 5 enthält den erfindungsgemäß vermahlenen Impfer. Die Beispiele 6, 7 und 9 die jeweiligen Vergleichsimpfer der Vergleichsbeispiele 2, 3 und 4. Im Beispiel 8 wurde ein unvermahlenes Böhmit vom Typ ApAOH180 gemäß den Beispielen 1 oder 2 als Impfer verwendet.

Die jeweiligen Dispersionen wurden in einen Laborautoklaven (Parr Instrument Company 4520 Bench Top Reactor) überführt, auf 145°C erhitzt und unter ständigem Rühren bei 1125rpm für 24h lang bei dieser Temperatur gehalten. Nach Abkühlen wurde die Reaktionsmischung abfiltriert, gewaschen und im Labortrockenschrank für 24h bei 110°C getrocknet.

Beispiel 10 beschreibt die erfindungsgemäße Herstellung des Böhmits in einem Produktionsautoklaven

### Beispiel 10

In einem 8 m³ Rührwerksautoklaven wurde 1 m³ Dicklauge vorgelegt, enthaltend 170 g/l freies Na₂O, und mit einer Dispersion bestehend aus 2800l Wasser, 500l wässriger Impferdispersion, enthaltend 50 kg Impfer gemäß Beispiel 1, und 500 kg feinstgefälltem Aluminiumhydroxid (APYRAL^{®} 60 D, der Nabaltec AG) zusammengeführt. Der Ansatz wurde auf 145°C aufgeheizt und unter ständigem Rühren bei ca. 900rpm für 21h auf dieser Temperatur gehalten.

Nach Abkühlen wurde die Reaktionsmischung über einen Larox Filterpressenautomat abfiltriert und gewaschen. Der so erhaltene Filterkuchen wurde getrocknet.

Tabelle 5 zeigt in Gegenüberstellung die Produktparameter der mit der autokatalytischen Kristallisation gewonnenen Böhmite unter Verwendung der erfindungsgemäßen Impfer nach Beispiel 5 sowie Beispiel 10 sowie der Vergleichsimpfer nach den Beispielen 6 bis 9. Das erfindungsgemäße Beispiel 5 zeigt dabei die Ergebnisse der Produktion im Labormaßstab, während das Beispiel 10 die Ergebnisse der Produktion im großtechnischen Maßstab zeigt.

Allein die erfindungsgemäßen Beispiele führen zu einem Produkt, das böhmitische Kristallstruktur hat sowie eine Partikelgröße mit einem D50 in der Größenordung von 200 nm, bei gleichzeitiger BET-Oberfläche von weniger als 30 m²/g sowie einem sehr geringen Porenvolumen.

Die Verwendung der Vergleichsimpfer gemäß den Beispielen 6, 7 sowie 9 führt zu einem Produkt, das ebenfalls böhmitische Struktur und größenordnungsmäßig die gewünschte Partikelgröße aufweist, jedoch eine deutlich größere Oberfläche besitzt. Der Einsatz eines unvermahlenen Impfers gemäß Beispiel 8 führt zu einem Böhmit mit hinreichend geringer Oberfläche. Das Produkt weist jedoch eine wesentlich größere Partikelgröße auf und ist damit nicht geeignet. Die Kristallphase wurde mittels XRD bestimmt.

Das erfindungsgemäß hydrothermal hergestellte Produkt kann seinserseits erneut als Impfer verwendet werden. Synthesen mit Impferdispersionen mit Impfkristallen aus erfindungsgemäßer, hydrothermaler Synthese unter gleichen Reaktionsbedingungen ergaben Ergebnisse, welche die in Tabelle 5 zusammengefassten Eigenschaften bestätigten.

**Tabelle 5**

| Produkparameter der nach Beispiel 5) - 10) hergestellten Böhmite. | | | | | | | |
|---|---|---|---|---|---|---|---|
| **Beispiel** | **Impfer** | **Reaktor** | **BET-Oberfläche in m²/g** | **Porenvolumen in cm³/g** | **Primärpartikelgröße in nm*(D50)** | **XRD-Phase** | **Glühverlust in %** |
| **Nr. 5 (E)** | ApAOH180_3h_pH3 | Labor-AK | 29 | 0,08 | 200 | Böhmit | 16,8 |
| **Nr. 6 (V)** | ApAOH180_3h | Labor-AK | 45 | 0,11 | 200 | Böhmit | 16,7 |
| **Nr. 7 (V)** | ApAOH60_3h | Labor-AK | 45 | 0,11 | 200 | Böhmit | 16,6 |
| **Nr. 8 (V)** | ApAOH180 | Labor-AK | 11 | 0,02 | 500-600 | Böhmit | 16,8 |
| **Nr. 9 (V)** | Pural SB_pep | Labor-AK | 78 | 0,19 | 300 | Böhmit | 16,4 |
| **Nr. 10 (E)** | ApAOH180_3h_pH3 | Prod.-AK | 28 | 0,07 | 200 | Böhmit | 16,9 |

| | | | | | | | |
|---|---|---|---|---|---|---|---|
| * optisch über REM-Aufnahme ** mittels Cilas Lasergranulometer 1064 Labor-AK = Laborautoklav, Volumen 2l Prod.-AK = Produktionsautoklav, Volumen 8m³ (E) = erfindungsgemäßes Beispiel; (V) = Vergleich | | | | | | | |

Im Weiteren wird eine Verwendung des erfindungsgemäß hergestellten Böhmites als Flammschutzmittel in Kunststoffen beschrieben.

Beispiele 11 - 13 zeigen die Anwendung der erfindungsgemäß hergestellten Produkte als Flammschutzmittel in einfachen Polymerrezepturen und die daraus resultierenden Vorteile. Derartig aufgebaute Kunststoffrezepturen finden beispielsweise bei elektrischen Kabeln als Kabelisolations- und Mantelmassen Anwendung.

### Beispiel 11

Die Tabelle 6 fasst die Zusammensetzung und die wichtigsten Kenndaten von auf einem EVA-Copolymeren mit einem Vinylacetat-Gehalt von 19 Gew.-% basierenden Kunsstoffcompounds zusammen. Die Vergleichrezepturen C1 und C2 enthalten als einziges Flammschutzmittel ein feinst kristallines Aluminiumhydroxid mit einer spezifischen Oberfläche von ungefähr 4m²/g (APYRAL^{®} 40CD, Nabaltec GmbH) bzw. 12m²/g (APYRAL^{®} 120E, Nabaltec GmbH) nach BET. Die Zusammensetzung C3 enthält neben dem Aluminiumhydroxid zusätzlich den Böhmit vom Typ AOH180 wie oben beschrieben.

Die Formulierung C4 enthält den erfindungsgemäß hergestellten Böhmit aus Beispiel 10 in Kombination mit Aluminiumhydroxid. Alle Zusammensetzungen enthalten einen Füllstoffanteil von 60Gew.-%.

Die Mischungen wurde auf einem Dispersionskneter Typ LDUK 1,0 der Fa. Werner und Pfleiderer hergestellt. Probekörper für die nachfolgenden Untersuchungen wurden aus Platten, die in einer Schwabenthanpresse Typ Polystat 300S im Schmelzepressverfahren hergestellt wurden, herausgestanzt. Die mechanischen Prüfungen nach DIN 53504 wurden an einer Zugprüfmaschine des Typs Tiratest 2705 durchgeführt. Schmelzeindex nach ASTM D 1238 wurden mittels Melt Flow Tester 6942, Sauerstoffindex nach ISO 4589 (ASTM D 2863) an einem FTA der Fa. Stanton Redcroft bestimmt.

Die Bestimmung der Entflammbarkeitsklasse erfolgte gemäß UL-Norm 94 V (UL = Underwriters Laboratories; ein industrieller Verein zur Standardisierung). Dazu wurde ein rechteckiger Probenkörper mit vertikal ausgerichteter Länge frei senkrecht fixiert. Die Länge/Breite/Dicke betrug 125mm/13mm/3,2mm. Die Bunsenbrennerflamme wurde 10 Sekunden lang mit einer Flammenhöhe von 20mm+-2mm um das untere, freie Ende des Probenkörpers gelegt. Die Zeit, die der Probenkörper anschließend nachbrannte, wurde aufgezeichnet. Sodann wurde der Probenkörper erneut für 10 Sekunden wie vorbeschrieben der Flamme ausgesetzt und erneut die Zeit gemessen, die der Probenkörper ab dem Entfernen der Flamme nachbrannte. Die Nachbrennzeiten wurden für jeden Probenkörper addiert und aufgezeichnet. Es wurden jeweils 5 Probenkörper getestet. Proben, bei denen jede einzelne Probe insgesamt 10 Sekunden oder weniger brannte und bei denen die Gesamtbrennzeit aller 5 Proben weniger als 50 Sekunden betrug und die während des Brennens keine Flammtropfen bildeten, wurden in die höchste Klasse UL 94 V0 eingestuft. Proben, bei denen die Brennzeit jeder einzelnen Probe mehr als 10, aber weniger als 30 Sekunden betrug, die eine Gesamtbrennzeit für alle 5 Proben von maximal 250 Sekunden zeigten und gleichfalls keine Flammtropfen bildeten, wurden in die Klasse UL 94 V1 eingestuft. Bei längerer Brennzeit und/oder Flammtropfenbildung kann keine Klassifizierung erfolgen.

**Tabelle 6**

| Zusammensetzung | C1 | C2 | C3 | C4 |
|---|---|---|---|---|
| Escorene UL 00119 | 39,6 | 39,6 | 39,6 | 39,6 |
| Dynasylan AMEO | 0,4 | 0,4 | 0,4 | 0,4 |
| Aluminumhydroxid mit 4m²/g Oberfläche | 60 | | 55 | 55 |
| Aluminumhydroxid mit 12m²/g Oberfläche | | 60 | | |
| AOH180 | | | 5 | |
| Produkt aus Bsp. Nr. 10 | | | | 5 |
| Summe | 100 | 100 | 100 | 100 |

**Tabelle 7**

| Zusammensetzung | C1 | C2 | C3 | C4 |
|---|---|---|---|---|
| Zugfestigkeit (MPa) | 13,2 | 14,4 | 14,1 | 14,9 |
| Bruchdehnung (%) | 210 | 165 | 194 | 209 |
| LOI (%O₂) | 35 | 40 | 36,5 | 39 |
| UL94 Klassifizierung | keine | V-1 | keine | V-0 |
| MFI (cm³/10min); 21,6kg /190°C | 5,1 | 0,9 | 4,3 | 3,7 |
| BET-(m²/g) des Füllstoffs bzw. der Füllstoffmischung | 3,5 | 12 | 4,9 | 5,5 |

Escorene UL00119 ist ein EVA-Copolymeres der ExxonMobil.

Dynasylan AMEO ist ein Aminosilan der Degussa AG
- Zugfestigkeit: aus Spannungs-Dehnungsmessung nach DIN 53504
- Bruchdehnung: aus Spannungs-Dehnungsmessung nach DIN 53504
- LOI: Limiting oxygen index (Sauerstoffindex) nach ISO 4589
- MFI: Melt flow index (Schmelzeindex) nach ASTM D 1238

Der Vergleich der in Tabelle 7 dargestellten Ergebnisse des Flammschutzverhaltens nach LOI und UL94V zeigt, dass nur die den erfindungsgemäß hergestellten Böhmit enthaltende Rezeptur C4 die höchste Klassifizierung UL94V-0 erreicht.

Bei Einsatz eines Aluminiumhydroxids mit höherer spezifischer Oberfläche gemäß C2 kann im Vergleich zu C1 zwar der LOI erhöht werden, allerdings wird nur die Einstufung nach UL94V-1 erreicht. Bei Kombination mit einem Böhmit nach dem Stande der Technik, wie in C3 dargestellt, kann zwar der LOI leicht erhöht werden, eine Klassifizierung nach UL94V gelingt allerdings nicht. Bei Verwendung des erfindungsgemäß hergestellten Böhmits gelingt es nicht nur die beste Flammschutzeinstufung zu erreichen, es werden gleichzeitig auch verbesserte mechanische Werte erreicht. Die erfindungsgemäße Zusammensetzung C4 zeigt zusätzlich einen hohen Schmelzeindex (MFI), was eine gute Verarbeitbarkeit in Schmelzeprozessen wie der Extrusion zur Folge hat.

### Beispiel 12

Das Beispiel 12 zeigt Kunststoffzusammensetzungen C5 und C6 mit dem erfindungsgemäß hergestellten Produkt und reduziertem Gesamtfüllgrad unter Erhalt des LOI-Wertes

In Tabelle 8 ist als Referenz nochmals Zusammensetzung C1 aus Beispiel 11 aufgeführt. Daneben finden sich zwei Formulierungen C5 und C6 die einen um 2 bzw. 5%-Punkte reduzierten Gehalt an anorganischem Füllstoff gegenüber C1 aufweisen.

**Tabelle 8**

| Zusammensetzung | C1 | C5 | C6 |
|---|---|---|---|
| Escorene UL 00119 | 39,6 | 41,6 | 44,6 |
| Dynasylan AMEO | 0,4 | 0,4 | 0,4 |
| Aluminumhydroxid mit 4m²/g Oberfläche | 60 | 48 | 45 |
| Produkt aus Bsp. 10 | | 10 | 10 |
| Summe | 100 | 100 | 100 |
| Zugfestigkeit (MPa) | 13,2 | 14,8 | 14,7 |
| Bruchdehnung (%) | 210 | 216 | 241 |
| LOI (%O₂) | 35,0 | 36,0 | 34,6 |
| MFI (cm³/10min); 21,6kg /190°C | 5,1 | 2,0 | 3,6 |
| BET (m²/g) des Füllstoffs bzw. der Füllstoffmischung | 3,5 | 7,7 | 8,0 |

Zusammensetzung C5 zeigt, dass trotz Erniedrigung des Füllgrads um 2%-Punkte ein sogar etwas höherer LOI-Wert erreicht werden kann. Bei C6 mit um 5%-Punkte erniedrigtem Füllgrad kann der LOI in etwa gehalten und gleichzeitig aufgrund des geringen Füllgrads und der Gegenwart des erfindungsgemäß hergestellten Böhmits exzellente Festigkeits- und Bruchdehnungswerte erreicht werden.

### Beispiel 13

Das Beispiel zeigt den Effekt der Feinteiligkeit auf den LOI in Polyamid (PA 6) Zusammensetzung C7 enthält den kommerziellen, kristallinen Böhmit ApAOH60 aus Vergleichsbeispiel 2, während die Zusammensetzung C8 den erfindungsgemäß hergestellten Böhmit gemäß Bsp.10 enthält.

**Tabelle 9**

| Zusammensetzung | C7 | C8 |
|---|---|---|
| Ultramid 5B | 70 | 70 |
| APYRAL^{©} AOH60 | 30 | |
| Produkt aus Bsp. 10 | | 30 |
| Summe | 100 | 100 |
| LOI (%O₂) | 23,0 | 30,8 |

| | | |
|---|---|---|
| Utramid 5B ist ein Polyamid 6 der BASF AG. | | |

Bei Einsatz des erfindungsgemäß hergestellten Böhmit kann ein deutlich höherer LOI erreicht werden.

## Patentansprüche

1. Verfahren zur Herstellung eines Böhmits mit einem mittleren Korndurchmesser D50 im Bereich von 50 bis 400 nm, einer BET-Oberfläche im Bereich von 10 bis 40 m²/g und einem Porenvolumen im Bereich von 0,05 bis 0,5 cm³/g mittels autokatalytischer hydrothermaler Kristallisation, umfassend die Schritte:
a. Vorlegen einer wässerigen, alkalischen Dispersion, enthaltend eine Hydratquelle und einen Impfer, wobei der Impfer hergestellt wird durch ein Verfahren zur Herstellung eines Impfers für die autokatalytische hydrothermale Kristallisation von Böhmit umfassend die Schritte:
aa. Erstellen einer wässrigen Dispersion aus einer Aluminiummonohydrat-Quelle mit böhmitischer Kristallstruktur, und
bb. Vermahlen der Dispersion, **dadurch gekennzeichnet, dass** eine Aluminiummonohydrat-Quelle mit böhmitischer Kristallstruktur mit einer Feststoffkonzentration von 5 % bis 50 % in wässriger Dispersion zusammen mit einer organischen Säure vermahlen wird, wobei beim Vermahlen der pH-Wert in einem Bereich von 2 bis 4 eingestellt ist, bis eine Zielkorngröße von 200 bis 300 nm erhalten wird;
b. Erhitzen der Dispersion in einem Autoklaven auf eine Temperatur im Bereich von 110 bis 180 °C bis die Hydratquelle im wesentlichen aufgebraucht ist,
c. Trocknen des erhaltenen Produktes.

2. Verfahren nach Anspruch 1, **dadurch gekennzeichnet, dass** der pH-Wert in Schritt bb. mit Essigsäure eingestellt wird.

3. Verfahren nach Anspruch 1 oder 2, **dadurch gekennzeichnet, dass** die Dispersion in Schritt a) einen Feststoffgehalt von 10 bis 25 Gew-%, der Aluminiummonohydrat-Quelle aufweist.

4. Verfahren nach einem der Ansprüche 1 bis 3, **dadurch gekennzeichnet, dass** in Schritt bb. die Temperatur der Dispersion in einem Bereich von 50 bis 70 °C gehalten wird.

5. Verfahren nach einem der Ansprüche 1 bis 4, **dadurch gekennzeichnet, dass** die Aluminiummonohydrat-Quelle in Schritt bb. einen mittleren Korndurchmesser D50 von 500 nm oder mehr sowie eine BET-Oberfläche von 20 m²/g oder mehr aufweist.

6. Verfahren nach einem der Ansprüche 1 bis 5, **dadurch gekennzeichnet, dass** die Feststoffkonzentration des Impfers 0,5 bis 50 %, bevorzugt 1 bis 20 %, beträgt, bezogen auf die Hydratquelle.

7. Verfahren nach einem der Ansprüche 1 bis 6, **dadurch gekennzeichnet, dass** die Konzentration der Natronlauge in der Dispersion 4 bis 50 g/l, bevorzugt 30 bis 40 g/l, beträgt, bezogen auf freies Na₂O.

8. Verfahren nach einem der Ansprüche 1 bis 7, **dadurch gekennzeichnet, dass** die Hydratquelle eine Kornverteilung D50 von 0,5 bis 100 µm, vorzugsweise von 0,5 bis 10 µm aufweist und eine Konzentration in der Dispersion von 10 bis 500 g/l, bevorzugt 50 bis 150 g/l aufweist.

## Claims

1. Process for the production of a boehmite having an median grain size D50 in the range from 50 to 400 nm, a BET-surface in the range from 10 to 40 m²/g and a pore volume in the range from 0.05 to 0.5 cm³/g by means of autocatalytic hydrothermal crystallization, comprising the steps:
a. providing an aqueous alkaline dispersion, comprising a hydrate source and a seed crystal, wherein the seed crystal is produced by a process for the preparation of a seed crystal for the autocatalytic thermal crystallization of boehmite comprising the steps:
aa. preparation of an aqueous dispersion of an aluminummonohydrate source with boehmitic crystal structure; and
bb. grinding of the dispersion, **characterized in that** the aluminummonohydrate source with boehmitic crystal structure with a solids concentration of 5 to 50 % in aqueous dispersion is ground together with an organic acid, wherein the pH value while grinding is adjusted in a range of 2 to 4 until a target grain size of 200 to 300 nm is obtained;
b. heating of the dispersion in an autoclave to a temperature in the range from 110 to 180 °C until the hydrate source is largely consumed,
c. drying of the obtained product.

2. Process according to claim 1, **characterized in that** the pH value in step bb. is adjusted with acetic acid.

3. Process according to claim 1 or 2, **characterized in that** the dispersion in step a) has a solid content of 10 to 25 % by weight of the aluminummonohydrate source.

4. Process according any one of claims 1 to 3, **characterized in that** the temperature of the dispersion in step bb. is kept in the range of 50 to 70 °C.

5. Process according to any one of claims 1 to 4, **characterized in that** the aluminummonohydrate source in step bb. has a median grain size D50 of 500 nm or more and a BET surface of 20 m²/g or more.

6. Process according to any one of claims 1 to 5, **characterized in that** the solids concentration of the seed crystal is 0.5 to 50 %, preferably 1 to 20 % based on the hydrate source.

7. Process according to any one of claims 1 to 6, **characterized in that** the concentration of sodium hydroxide in the dispersion is 4 to 50 g/l, preferably 30 to 40 g/l, based on free Na₂O.

8. Process according to any one of claims 1 to 7, **characterized in that** the hydrate source has a grain size distribution D50 of 0.5 to 100 µm, preferably 0.5 to 10 µm and a concentration within the dispersion of 10 to 500 g/l, preferably 50 to 150 g/l.

## Revendications

1. Procédé servant à produire de la boehmite présentant une granulométrie moyenne D50 située dans la plage allant de 50 à 400 nm, une surface BET située dans la plage allant de 10 à 40 m²/g et un volume de pores situé dans la plage allant de 0,05 à 0,5 cm³/g au moyen d'une cristallisation hydrothermale autocatalytique, comprenant les étapes suivantes :
a. la présentation d'une dispersion alcaline aqueuse contenant une source d'hydrate et un inoculateur, l'inoculateur étant préparé par un procédé servant à préparer un inoculateur pour la cristallisation hydrothermale autocatalytique de la boehmite, comprenant les étapes suivantes :
aa. l'élaboration d'une dispersion aqueuse à partir d'une source de monohydrate d'aluminium et d'une structure cristalline à base de boehmite, et
bb. le broyage de la dispersion,
**caractérisé en ce qu'**une source de monohydrate d'aluminium présentant une structure cristalline à base de boehmite d'une concentration en matières solides allant de 5 % à 50 % est broyée dans la dispersion aqueuse conjointement avec un acide organique, la valeur pH étant ajustée, lors du broyage, dans une plage allant de 2 à 4 jusqu'à ce qu'une granulométrie cible allant de 200 à 300 nm soit obtenue ;
b. le réchauffement de la dispersion dans un autoclave à une température située dans la plage allant de 110 à 180 °C jusqu'à ce que la source d'hydrate soit essentiellement consommée ;
c. le séchage du produit obtenu.

2. Procédé selon la revendication 1, **caractérisé en ce que** la valeur pH est ajustée à l'étape bb. avec de l'acide acétique.

3. Procédé selon la revendication 1 ou 2, **caractérisé en ce que** la dispersion présente, à l'étape a), une teneur en matières solides allant de 10 à 25% en poids de la source de monohydrate d'aluminium.

4. Procédé selon l'une quelconque des revendications 1 à 3, **caractérisé en ce qu'**à l'étape bb., la température de la dispersion est maintenue dans une plage allant de 50 à 70 °C.

5. Procédé selon l'une quelconque des revendications 1 à 4, **caractérisé en ce que** la source de monohydrate d'aluminium présente, à l'étape bb., une granulométrie moyenne D 50 de 500 nm ou plus ainsi qu'une surface BET de 20 m²/g ou plus.

6. Procédé selon l'une quelconque des revendications 1 à 5, **caractérisé en ce que** la concentration en matières solides de l'inoculateur est de 0,5 à 50 %, de manière préférée de 1 à 20 %, par rapport à la source d'hydrate.

7. Procédé selon l'une quelconque des revendications 1 à 6, **caractérisé en ce que** la concentration de la soude caustique est, dans la dispersion, de 4 à 50 g/l, de manière préférée de 30 à 40 g/l, par rapport au Na₂O libre.

8. Procédé selon l'une quelconque des revendications 1 à 7, **caractérisé en ce que** la source d'hydrate présente une répartition granulométrique D 50 allant de 0,5 à 100 µm, de préférence de 0,5 à 10 µm et présente une concentration dans la dispersion allant de 10 à 500 g/l, de manière préférée allant de 50 à 150 g/l.
